**Europäisches Patentamt**

**European Patent Office**

**Office européen des brevets**

(19)

(11) Veröffentlichungsnummer: **0 356 752 B1**

(12)

# EUROPÄISCHE PATENTSCHRIFT

(45) Veröffentlichungstag der Patentschrift:
18.12.91 Patentblatt 91/51

(51) Int. Cl.$^5$: **B60D 1/32**

(21) Anmeldenummer: **89114411.5**

(22) Anmeldetag: **04.08.89**

(54) Reibungsbremse für eine Anhängerkupplung.

(30) Priorität: **27.08.88 DE 3829132**

(43) Veröffentlichungstag der Anmeldung:
**07.03.90 Patentblatt 90/10**

(45) Bekanntmachung des Hinweises auf die
Patenterteilung:
**18.12.91 Patentblatt 91/51**

(84) Benannte Vertragsstaaten:
**DE ES FR GB IT NL SE**

(56) Entgegenhaltungen:
**EP-A- 0 171 586**
**FR-A- 748 408**
**FR-A- 2 432 396**
**GB-A- 1 380 051**
**US-A- 2 127 913**

(73) Patentinhaber: **AL-KO KOBER AG**
**Ichenhauser Strasse 14**
**W-8871 Kötz 2 (DE)**

(72) Erfinder: **Wöhrle, Rudolf**
**Kirchstrasse 2**
**W-8873 Ichenhausen/Rieden (DE)**
Erfinder: **Werdich, Anton**
**Sürdring 44**
**W-8878 Bibertal/OT Anhofen (DE)**
Erfinder: **Köhler, Robert**
**Kemnat 126 b**
**W-8877 Burtenbach (DE)**

(74) Vertreter: **Ernicke, Hans-Dieter, Dipl.-Ing. et al**
**Schwibbogenplatz 2b**
**W-8900 Augsburg (DE)**

## Beschreibung

Die Erfindung betrifft eine Reibungsbremse für eine Anhängerkupplung mit den Merkmalen im Oberbegriff des Hauptanspruchs.

Eine derartige Reibungsbremse ist aus der GB-A-892952 bekannt, bei der die Reibstößel allerdings über ein Gewinde zugestellt werden. Diese Anordnung ist beim An- und Abkuppeln bedienungsunfreundlich. Die Reibkräfte können außerdem nicht gleichmäßig und zuverlässig eingestellt werden. Die angestrebte Dämpfung der Eigenbewegungen und die Vermeidung der Bewegungsübertragung auf das Zugfahrzeug lassen sich nicht befriedigend erreichen.

Aus der EP-A-171586 ist eine ähnliche Reibungsbremse bekannt, bei der die schwimmend geführten Reibungstößel mittels einer Spannzange angepreßt werden. Die Schließkraft wird über ein Federglied aufgebracht, das die Enden der Spannzange zusammenhält. Diese Anordnung ist ebenfalls bedienungsunfreundlich, da beide Hände benötigt werden und mehrere Bewegungen erforderlich sind. Außerdem bedingt die Reibungsbremse hohe Handkräfte, die ergonomisch ungünstig eingesetzt werden müssen. Die Handhabung ist daher nicht nur umständlich, sondern auch mit einer erheblichen Unfallgefahr verbunden. Unpraktisch ist auch, daß ein Verschleiß des Reibebelages nur über die Spannfeder aufgefangen werden kann, was aufgrund der ungünstigen Hebelverhältnisse nur in Grenzen möglich ist und außerdem den Einsatz teurer Gasfedern mit flacher Kennlinie bedingt.

Aus der FR-A-748408 ist eine Anhängerkupplung für Kugelköpfe bekannt, bei der die Kupplungsmechanik aus zwei Schalen besteht, die in einem Rohr untergebracht sind. Die eine Kupplungsschale ist federbelastet und axial beweglich im Rohr angeordnet. Sie wird durch einen Bedienungshebel vor- und zurückbewegt, der in einer Kurvenbahn des Rohrmantels geführt ist.

Aus der US-A 2127913 ist eine Reibungsanordnung mit einem federnd angepreßten Reibstößel bekannt, der allerdings keine Verstellmöglichkeiten aufweist.

Die DE-C 1287373 zeigt eine Reibungsbremse für eine allseitig schwenkbare Lagerung, bei der der Reibstößel mittels einer Schraube zugestellt wird. Diese Anordnung zeigt ebenfalls noch keine ausreichende Bedienungsfreundlichkeit.

Es ist Aufgabe der vorliegenden Erfindung, eine Reibungsbremse aufzuzeigen, die bedienungsfreundlich ist, einen ergonomisch günstigen Einsatz der Handkräfte ermöglicht und eine reproduzierbare Einstellung der Reibkräfte gestattet.

Die Erfindung löst diese Aufgabe mit den Merkmalen im Kennzeichenteil des Hauptanspruchs. Mit der erfindungsgemäßen Bajonettführung wird eine ergonomisch günstige Drehbewegung in eine axiale Zustellbewegung des Stellkopfes umgesetzt, der über eine Feder auf den Reibstößel einwirkt. Jeder Reibstößel hat hierbei seine eigene Feder und kann separat und verschleißgerecht eingestellt werden. Die Erfindung eignet sich besonders für Anhängerkupplungen mit Kugelkopf, kann aber auch auf einen anderen Kupplungstyp, beispielsweise eine Zapfenkupplung entsprechend der GB-A 892952 übertragen werden.

Vorzugsweise besitzt die Reibungsbremse zwei Reibstößel, die in seitlichen Ansätzen am Kupplungsgehäuse geführt sind. Im Interesse einer einfachen Fertigung und einer platzsparenden Bauweise ist die Bajonettführung durch mehrere Kurvenbahnen im Mantel dieser Ansätze und durch darin eingreifende Führungsstifte der Stellköpfe realisiert. Zur Erzielung eines optimalen Wirkungsgrades empfiehlt es sich, die Führungsstifte mit einer Rollagerung, z.B. einem Nadellager, reibungsarm in den nutenförmigen Kurvenbahnen zu führen. Für eine selbsttätige Verriegelung der Reibungsbremse in der Öffnungs- und Schließstellung zeigt die Kurvenbahn an beiden Enden Rastpositionen zur formschlüssigen Festlegung des Führungsstiftes.

Die erfindungsgemäße Reibungsbremse besitzt Bedienhebel zur Betätigung der Stellköpfe, die den Einsatz der Handkräfte minimieren. Im Gegensatz zum Stand der Technik steht außerdem ein großer Schwenkweg zur Verfügung, so daß zur Leistung der Arbeit geringere Kräfte erforderlich sind. Die Bedienhebel können einzeln oder gemeinsam betätigt werden, wobei im zweiten Fall ein gemeinsames Griffteil vorgesehen ist.

Das Griffteil besitzt eine Haube, die sich beim Schließen der Reibungsbremse auf den Kupplungsgriff legt und Bedienungsfehler beim Abkuppeln des Anhängers verhindert. Der Kupplungsgriff kann dadurch erst nach Lösen der Reibungsbremse betätigt werden.

Um eine möglichst einfache Einstellung der Reibungsbremse zu gestatten, läßt sich der Reibungsstößel in der Länge verstellen. Er ist hierzu zweiteilig ausgebildet, wobei die Spannhülse von außen zur Längenveränderung gedreht werden kann. Damit läßt sich auch bei Verschleiß die Reibungsbremse schnell und einfach nachstellen.

Bei der erfindungsgemäßen Reibungsbremse sind die Federn im Bereich der Stößel angeordnet, so daß für die Federn keine Übersetzungsprobleme wie bei der EP 171586 auftreten. Im bevorzugten Ausführungsbeispiel ist ein Paket aus Tellerfedern vorgesehen, das auf der Spannhülse des Reibungsstößels angeordnet ist. Der Stellkopf, bzw. Deckel drückt mit einem Ansatz direkt auf das Federpaket.

2

In den Unteransprüchen sind weitere vorteilhafte Ausgestaltungen der Reibungsbremse angegeben.

Die Erfindung ist in den Zeichnungen beispielsweise und schematisch dargestellt. Im einzelnen zeigen

Fig. 1 :            eine Seitenansicht einer Anhängerkupplung mit Reibungsbremse,

Fig. 2 :            eine teilweise geschnittene Draufsicht entsprechend Pfeil II von Fig. 1,

Fig. 3, 4 und 5 :      verschiedene Ansichten des Kupplungsgehäuses,

Fig. 6 :            einen Längsschnitt durch einen Reibstößel in Exposionsdarstellung und

Fig. 7 :            einen Schnitt durch den Bedienhebel der Reibungsbremse gemäß Schnittlinie VII-VII von Fig. 2.

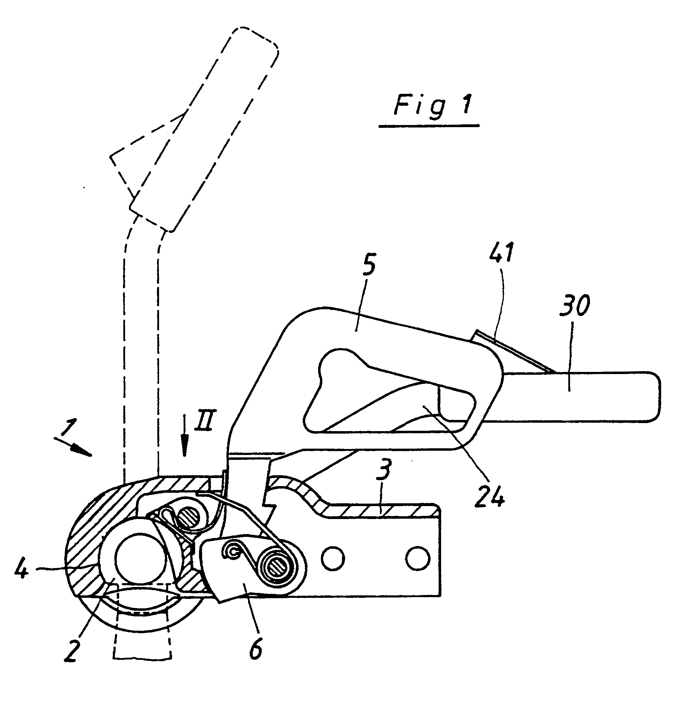

Fig. 1 zeigt im Längsschnitt eine Kugelkopf-Anhängerkupplung (1) deren Gehäuse (3) an der Deichsel eines Fahrzeuganhängers, beispielsweise eines Wohnwagens befestigt ist. Das Kupplungsgehäuse (3) steht mit einem dem Zugfahrzeug zugeordneten Kugelkopf (2) über eine entsprechend geformte Kalotte (4) im Eingriff. Im Inneren des Kupplungsgehäuses (3) ist eine Kupplungsmechanik (6) untergebracht, die mittels eines Kupplungsgriffes (5) betätigt wird. Zum Öffnen wird hierdurch ein Kalottenabschnitt unter Freigabe des Kugelkopfes (2) entfernt und zum Schließen wieder zugestellt.

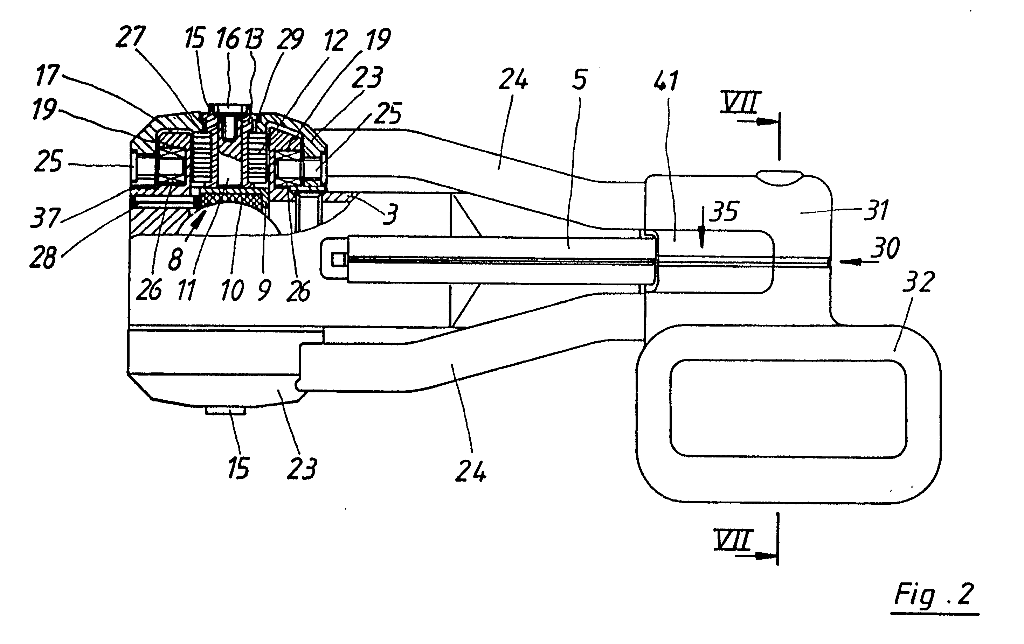

Die Anhängerkupplung (1) besitzt zur Dämpfung der Schlingerbewegungen des Anhängers eine Reibungsbremse (7) (vgl. Fig. 2). In Ergänzung hierzu ist auch die Kalotte (4) an den Berührungsflächen mit dem Kugelkopf (2) mit einem Reibbelag (nicht dargestellt) versehen. In der Reibungsbremse (7) und der Kalotte (4) werden die vom Anhänger über die Kupplung (1) eingeleiteten Kräfte durch Reibung aufgenommen und gedämpft. Sie können damit nicht auf das Zugfahrzeug durchschlagen. Die Reibungsbremse (7) kann mittels Bedienhebeln (24) zum Ab- und Ankuppeln geöffnet (stehende Hebelstellung) und geschlossen (liegende Hebelstellung) werden.

Wie Fig. 2 näher verdeutlicht, besteht die Reibungsbremse (7) aus zwei Reibstößeln (8), die jeweils mittels eines Stellkopfes (23) über eine Feder (12) gegenüber dem Kugelkopf (2) zugestellt und angepreßt werden. Die Stellköpfe (23) werden hierzu mit Hilfe zweier Bedienhebel (24) gedreht, wobei die Drehbewegung über eine Bajonettführung (19, 25) in eine axiale Zustellbewegung der Reibstößel (8) umgesetzt wird.

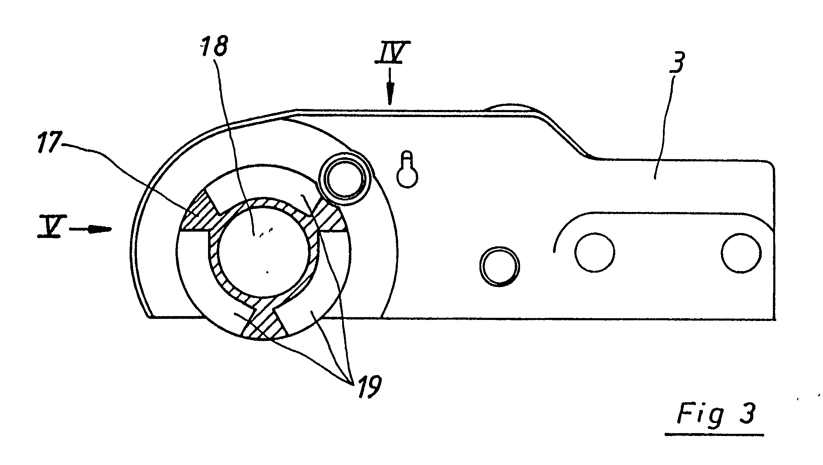

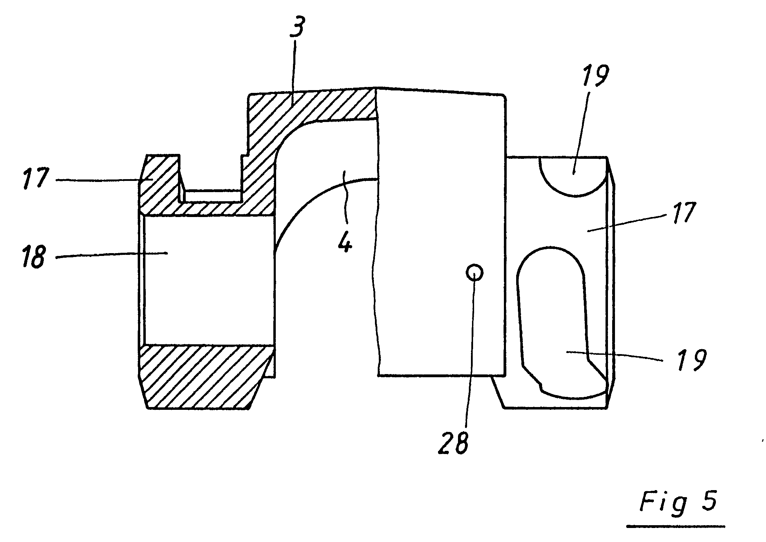

Wie Fig. 3 bis 5 im einzelnen zeigen, besitzt das Kupplungsgehäuse (3) zwei seitliche und einander fluchtend gegenüberliegende, zylindrische Gehäuseansätze (17) mit horizontalen und mittig gegenüber der Kalotte (4) bzw. dem Kugelkopf (2) angeordneten Bohrungen (18). In den Bohrungen (18) sind die Reibstößel (8) längsbeweglich geführt (vgl. Fig. 2). Wie Fig. 2 und 5 im Halbschnitt verdeutlichen, ist stirnseitig im Kupplungsgehäuse (3) auf jeder Seite eine Drehsicherung (28) in Form eines Sperrstiftes für die Reibstößel (8) angeordnet.

Die seitlich vorspringenden Gehäuseansätze (17) weisen in ihrem Mantel (3) gleichmäßig über den Umfang verteilte nutenförmige Kurvenbahnen (19) auf. Vorzugsweise sind jeweils drei Kurvenbahnen (19) vorgesehen. Die Stellköpfe (23) sind als zylindrische Deckel ausgebildet, die die Gehäuseansätze (17) stirnseitig und seitlich umfassen. Zwischen den Deckeln (23) und dem angrenzenden Kupplungsgehäuse (3) ist eine Dichtscheibe (37) angeordnet.

In den Deckeln (23) sind jeweils drei radial nach innen vorspringende Führungsstifte (25) angeordnet, die mit den Kurvenbahnen (19) in Eingriff stehen. Die Führungsstifte (25) sind formschlüssig über eine reibungsarme Rollagerung (26) an den Wänden der Kurvenbahnen (19) geführt. Die Rollagerung (26) besteht vorzugsweise aus einem Nadellager ohne Innenring oder einem leichtgängigen Gleitring.

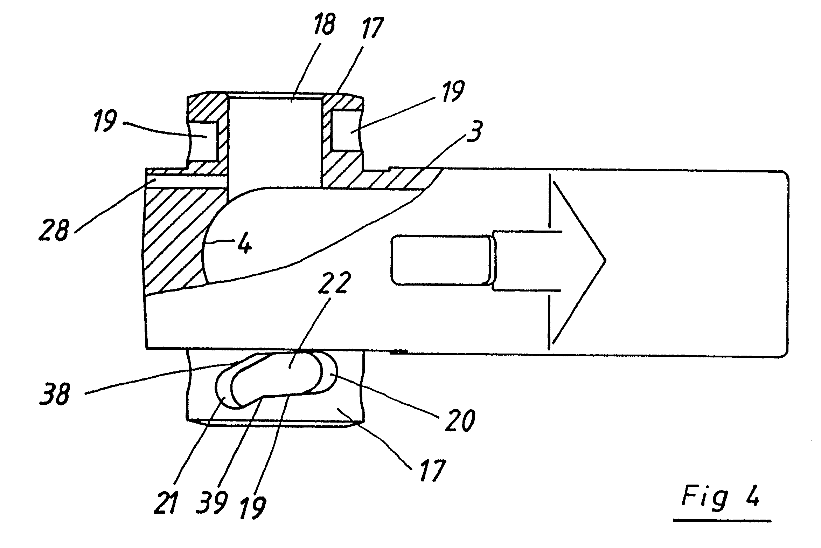

Fig. 4 verdeutlicht im einzelnen die Gestaltung der Kurvenbahnen (19). Zur Erzeugung einer axialen Zustellbewegung der Stößel (8) sind diese schräg zum Zentrum der Kalotte (4) bzw. des Kugelkopfes (2) ausgerichtet. Sie besitzen an ihren Enden jeweils Rastpunkte (20, 21) in Form von Bohrungen, die gegenüber dem im wesentlichen geradwandigen Mittelstück (22) der Kurvenbahn (19) versetzt sind. In den Rastpunkten (20, 21) werden die Führungsstifte (25) unter der Kraft der Federn (12) angepreßt und damit formschlüssig arretiert. Sie können sich von selbst aus dieser Lage nicht lösen, wodurch die Reibungsbremse (7) in ihrer Öffnungs- und Schließstellung selbsttätig fixiert ist. Die näher zum Kalottenmittelpunkt gelegene Rastposition (20) definiert die Schließstellung, in der die Reibstößel (8) an den Kugelkopf (2) angepreßt sind. Die weiter entfernt liegende Rastposition (21) definiert hingegen die Öffnungsstellung, in der die Reibstößel (8) von der Federkraft entlastet und außerdem so weit vom Kugelkopf (2) zurückgezogen sind, daß das Kupplungsgehäuse (3) vom Kugelkopf (2) abgehoben werden kann.

Am Übergang zwischen dem Rastpunkt (21) und dem Mittelstück (22) ist die Kurvenbahn (19) verbreitert. Sie zeigt an dieser Stelle mittig gegenüber der Raststufe (39) eine zusätzliche Wölbung (38). An dieser Stelle, die in etwa einem Schwenkwinkel von ca. 20° des Bedienhebels (24) aus der vertikalen Öffnungsstellung (vgl. Fig. 1) entspricht, ist der Reibstößel (8) bereits in Anlage mit dem Kugelkopf (2), wobei die Federn (12) aber noch nicht gespannt sind. In dieser Stellung kann ein etwaiger Verschleiß des Reibstößels (8) durch Nachstel-

3

len ausgeglichen werden.

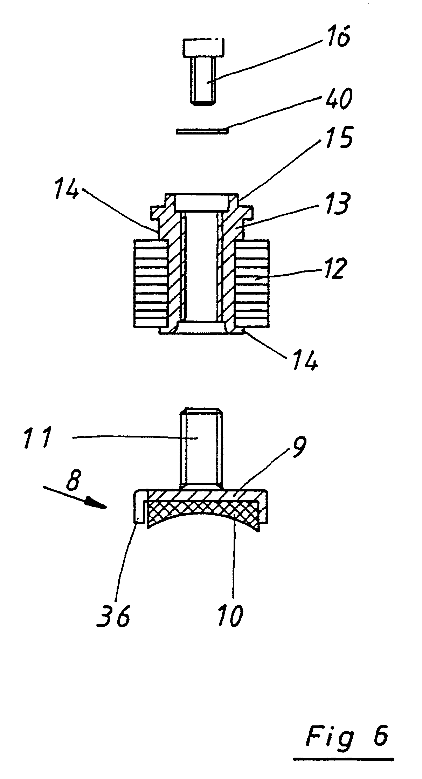

Fig. 2 und 6 verdeutlichen den Aufbau des Reibstößels (8). Dieser besteht aus einem Belagträger (9), in dem ein dem Kugelkopf (2) angepaßter Reibbelag (10) befestigt, vorzugsweise eingeklebt ist. Der Belagträger (9) und der Reibbelag (10) weisen seitlich eine Ausnehmung (36) für den Eingriff der Drehsicherung (28) auf. Am Belagträger (9) ist ein Gewindebolzen (11) angeordnet, der in eine Spannhülse 13) einschraubbar ist. Die Spannhülse (13) trägt auf ihrem Mantel im unteren Bereich ein Paket aus Tellerfedern (12), das zwischen Ansätzen (14) axial geführt und eingespannt ist. Im oberen Bereich ist die Spannhülse (13) mit unterschiedlichen Durchmessern gestuft ausgebildet und besitzt am oberen Ende eine Schlüsselfläche (15).

Fig. 2 verdeutlicht die Einbaulage des Reibstößels (8). Er ist mit seinem Belagträger (9) und dem Federpaket (12) in den Öffnungen (18) der Gehäuseansätze (7) axial beweglich geführt, durch die Drehsicherung (28) aber gegen Drehen um seine Längsachse gesperrt. Der Deckel (23) weist eine zentrale Öffnung (29) auf, durch die die Spannhülse (13) mit ihrer Schlüsselfläche (15) nach außen tritt. Die Öffnung (29) ist entsprechend der Hülsenkontur abgestuft. Der Deckel (23) besitzt einen ringförmigen Ansatz (27), mit dem er zwischen der Spannhülse (13) und dem Gehäuseansatz (17) auf das Federpaket (12) drückt.

Über den Schwenkweg wird der Deckel (23) mittels der Bajonettführung (19, 25) gegenüber dem Gehäuseansatz (17) axial bewegt. Beim Schließen der Reibungsbremse (7) drückt er mit seinem Ansatz (27) auf das Federpaket (12) und preßt den Reibungsstößel (8) mit seinem Reibbelag (10) gegen den Kugelkopf (2). Zum Öffnen nimmt er durch die gestufte Ausbildung der Öffnung (29) den Reibstößel (8) in entgegengesetzter Richtung mit.

Um den Reibstößel (8) mit seinen Bremsbelägen (10) einzustellen, bzw. bei Verschleiß nachzustellen, ist der Reibstößel (8) längenverstellbar. Eine Längenveränderung erfolgt durch Ein- oder Ausschrauben der Spannhülse (13) gegenüber dem drehgesicherten (28) Belagträger (9). Die Einstellung kann von außen über die Schlüsselfläche (15) vorgenommen werden. Hierzu wird der Deckel (23) in der vorerwähnten Weise um ca. 20° aus der Öffnungsstellung gedreht. In dieser Position kann der Belagträger (9) so weit aus der am Deckel (23) geführten Spannhülse (13) herausgeschraubt werden, bis er am Kugelkopf (2) anliegt. In dieser Stellung wird der Gewindebolzen (11) durch eine in die Spannhülse (13) von der anderen Seite eingeführte Schraube (16) mit Scheibe (40) gekontert.

Der Einstellvorgang erfolgt symmetrisch an beiden Reibstößeln (8). Auf diese Weise herrschen definierte Anpreß- und Reibbedingungen. Über den restlichen Weg der Kurvenbahnen (19) werden die Federn (12) um eine vorbestimmte Strecke gespannt und damit definierte Reibkräfte aufgebracht. Der Federweg ist dabei so groß bemessen, daß zusammen mit einer entsprechenden Federauslegung auch ein Verschleiß des Reibbelages (10) ohne Nachstellung in weiten Grenzen kompensiert werden kann.

Wie Fig. 2 verdeutlicht, sind die beiden Bedienhebel (24) nach innen gekröpft und an den Enden durch ein Griffteil (30) mit einer seitlichen Grifföffnung miteinander verbunden. Das Griffteil (30) besteht aus zwei Griffhälften (31, 32), die mit Aufnahmeöffnungen versehen und auf die Bedienhebel (24) aufgesteckt sind. Das Griffteil (30) weist an der Verbindungsstelle zwischen den Griffhälften (31, 32) einen biegeelastischen Bereich (35) auf, der die Hebelbewegungen ausgleicht, die durch das axiale Bewegungsspiel der Deckel (23) hervorgerufen werden.

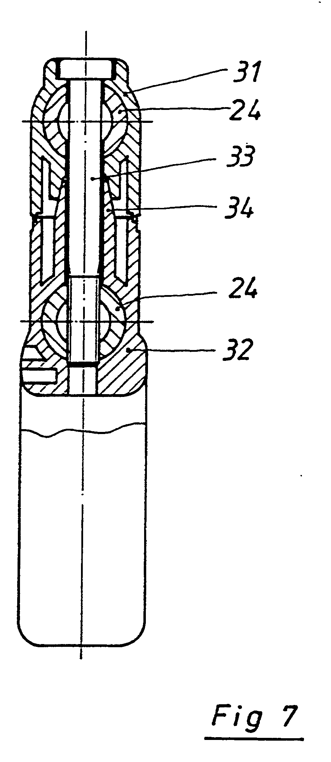

Fig. 7 zeigt das Griffteil (30) im Schnitt. Die Griffhälften (31, 32) sind durch eine Keilführung (34) im elastischen Bereich ineinander geführt und durch eine Schraube (33) mit Spiel verbunden.

Die beiden Griffhälften (31, 32) formen an der Verbindungsstelle (35) gemeinsam eine U-förmige Haube (41) aus. Diese erstreckt sich längs der Bedienhebel (24) und steigt vom Bereich der Schraube (33) ausgehend nach vorne an (vgl. Fig. 1 und 2). Bei geschlossener Reibungsbremse (7) übergreift die Haube (41) den zwischen den Hebeln (24) liegenden Kupplungsgriff (5). In dieser Stellung kann der Kupplungsgriff (5) erst nach dem Öffnen der Reibungsbremse (7) betätigt werden bzw. werden die Bedienhebel (24) beim Anheben des Kupplungsgriffs (5) mitbewegt.

Variationen des gezeigten Ausführungsbeispiels sind in vielerlei Hinsicht möglich. Zum einen können mehr oder weniger Reibstößel vorhanden sein. Andererseits kann die Bajonettführung (19, 25) anders gestaltet sein, indem beispielsweise eine nutförmige Kurvenbahn stirnseitig in das Kupplungsgehäuse eingearbeitet ist. Es ist auch eine Umkehr der erhabenen und vertieften Teile der Bajonettführung sowie ein Zuordnungstausch möglich. Variationen sind auch hinsichtlich der Ausbildung des Reibstößels möglich. Der Reibstößel kann auch auf Kosten der Einstellbarkeit einteilig ausgebildet sein.

## STÜCKLISTE

| 1 | Kugelkopf-Anhängerkupplung |
|---|---|
| 2 | Kugelkopf |
| 3 | Kupplungsgehäuse |

| 4 | Kalotte |
|---|---|
| 5 | Kupplungsgriff |
| 6 | Kupplungsmechanik |
| 7 | Reibungsbremse |
| 8 | Reibstößel |
| 9 | Belagträger |
| 10 | Reibbelag |
| 11 | Gewindebolzen |
| 12 | Druckfeder, Federpaket |
| 13 | Spannhülse |
| 14 | Ansatz |
| 15 | Schlüsselfläche |
| 16 | Schraube |
| 17 | Gehäuseansatz |
| 18 | Bohrung |
| 19 | Bajonettführung, Kurvenbahn |
| 20 | Rastposition, Rastpunkt |
| 21 | Rastposition, Rastpunkt |
| 22 | Mittelstück |
| 23 | Stellkopf, Deckel |
| 24 | Bedienhebel |
| 25 | Bajonettführung, Führungsstift |
| 26 | Rollagerung, Nadellager, Gleitrolle |
| 27 | Ansatz |
| 28 | Drehsicherung |
| 29 | Öffnung |
| 30 | Griffteil |
| 31 | Griffhälfte |
| 32 | Griffhälfte |
| 33 | Schraube |
| 34 | Keilführung |
| 35 | biegeelastischer Bereich |
| 36 | Ausnehmung |
| 37 | Dichtscheibe |
| 38 | Wölbung |
| 39 | Raststufe |
| 40 | Scheibe |
| 41 | Haube |

**Patentansprüche**

1. Reibungsbremse für eine Anhängerkupplung, insbesondere eine Kugelkopf-Anhängerkupplung, bestehend aus mindestens zwei im Kupplungsgehäuse beweglich geführten und an den Kugelkopf anpreßbaren Reibstößeln, dadurch **gekennzeichnet**, daß die Reibstößel (8) jeweils über eine Feder (12) und einen Stellkopf (23) zustellbar sind, der mittels einer Bajonettführung (19, 25) drehbar und axial beweglich mit dem Kupplungsgehäuse (3) verbunden ist, wobei das Kupplungsgehäuse (3) einander gegenüberliegende seitliche Gehäuseansätze (17) besitzt, in denen die Reibstößel (8) geführt sind und die im Gehäusemantel schräge zum Kugelkopf (2) gerichtete Kurvenbahnen (19) aufweisen.

2. Reibungsbremse nach Anspruch 1, dadurch **gekennzeichnet**, daß die Stellköpfe (23) Bedienhebel (24) aufweisen, die miteinander über ein Griffteil (30) verbunden sind.

3. Reibungsbremse nach Anspruch 1 oder 2, dadurch **gekennzeichnet**, daß jeder Gehäuseansatz (17) drei gleichmäßig über den Umfang verteilte Kurvenbahnen (19) aufweist.

4. Reibungsbremse nach Anspruch 1 oder 3, dadurch **gekennzeichnet**, daß die Stellköpfe (23) als die Gehäuseansätze (17) übergreifende Deckel ausgebildet sind, die mit Führungsstiften (25) radial in die nutförmigen Kurvenbahnen (19) greifen.

5. Reibungsbremse nach Anspruch 1, 3 oder 4, dadurch **gekennzeichnet**, daß die Kurvenbahnen (19) an den Enden formschlüssige Rastpositionen (20, 21) für den Führungsstift (25) aufweisen.

5

6. Reibungsbremse nach einem oder mehreren der Ansprüche 1 bis 5, dadurch **gekennzeichnet**, daß die Führungsstifte (25) über eine Rollagerung (26) in den Kurvenbahnen (19) geführt sind.

7. Reibungsbremse nach Anspruch 1 oder einem der folgenden, dadurch **gekennzeichnet**, daß der Reibstößel (8) längenverstellbar ausgebildet ist.

8. Reibungsbremse nach Anspruch 7, dadurch **gekennzeichnet**, daß der Reibstößel (8) eine Druckfeder (12) trägt, auf die der Deckel (23) mit einem Ansatz (27) drückt.

9. Reibungsbremse nach Anspruch 7 oder 8, dadurch **gekennzeichnet**, daß der Reibstößel (8) einen Belagträger (9) aufweist, der mit einer Spannhülse (13) längenverstellbar verbunden ist, auf der ein Federpaket (12) aufgezogen ist.

10. Reibungsbremse nach Anspruch 9, dadurch **gekennzeichnet**, daß der Reibstößel (8) mit seinem Belagträger (9) im Gehäuseansatz (17) drehfest (28) geführt ist, wobei die Spannhülse (13) durch eine Öffnung (29) im Deckel (23) ragt und eine von außen zugängliche Schlüsselfläche (15) aufweist.

11. Reibungsbremse nach Anspruch 2, dadurch **gekennzeichnet**, daß das Griffteil (30) zwei Griffhälften (31, 32) aufweist, die jeweils auf einem Bedienhebel (24) angeordnet und miteinander biegeelastisch (35) verbunden sind.

12. Reibungsbremse nach Anspruch 11, dadurch **gekennzeichnet**, daß die Griffhälften (31, 32) über eine Keilführung (34) formschlüssig miteinander verbunden und verschraubt sind.

13. Reibungsbremse nach Anspruch 2, dadurch **gekennzeichnet**, daß das Griffteil (30) eine Haube (41) aufweist, die bei geschlossener Reibungsbremse (7) über dem Kupplungsgriff (5) liegt.

## Claims

1. Friction brake for a trailer coupling, in particular a ball-headed trailer coupling, comprising at least two friction rams which may be guided movably in the coupling housing and may be pressed against the ball head, characterized in that the friction rams (8) may each be adjusted by way of a spring (12) and an adjustment head (23) connected rotatably and axially movably to the coupling housing (3) by means of a bayonet guide (19, 25), the coupling housing (3) having mutually opposing lateral housing shoulders (17) in which the friction rams (8) are guided and which have cam paths (19) directed obliquely with respect to the ball head (2) in the housing casing.

2. Friction brake according to Claim 1, characterized in that the adjustment heads (23) have operating levers (24) which are connected to one another by way of a handle part (30).

3. Friction brake according to Claim 1 or 2, characterized in that each housing shoulder (17) has three cam paths (19) distributed evenly over the periphery.

4. Friction brake according to Claim 1 or 3, characterized in that the adjustment heads (23) are constructed as covers reaching over the housing shoulders (17) and engaging by means of guide pins (25) radially into the groove-shaped cam paths (19).

5. Friction brake according to Claim 1, 3 or 4, characterized in that the cam paths (19) have at the ends form-fitting latching positions (20, 21) for the guide pin (25).

6. Friction brake according to one or more of Claims 1 to 5, characterized in that the guide pins (25) are guided in the cam paths (19) by way of a roller bearing (26).

7. Friction brake according to Claim 1 or one of the following claims, characterized in that the friction ram (8) is constructed to be longitudinally adjustable.

8. Friction brake according to Claim 7, characterized in that the friction ram (8) carries a pressure spring (12) on which the cover (23) presses by means of a shoulder (27).

9. Friction brake according to Claim 7 or 8, characterized in that the friction ram (8) has a lining support (9) which is connected longitudinally adjustably to a clamp sleeve (13) onto which a spring assembly (12) is drawn.

10. Friction brake according to Claim 9, characterized in that the friction ram (8) by means of its lining support (9) is guided non-rotatably (28) in the housing shoulder (17), the clamp sleeve (13) projecting through an opening (29) in the cover (23) and having a key surface (15) accessible from the outside.

11. Friction brake according to Claim 2, characterized in that the handle part (30) has two handle halves (31, 32) which are each arranged on an operating lever (24) and are flexionally resiliently (35) connected to one another.

12. Friction brake according to Claim 11, characterized in that the handle halves (31, 32) are connected to one another and screwed with form fit by way of a wedge-shaped guide (34).

13. Friction brake according to Claim 2, characterized in that the handle part (30) has a hood (41) which lies over the coupling handle (5) when the friction brake (7) is closed.

EP 0 356 752 B1

## Revendications

1. Frein à friction pour un attelage de remorque, notamment pour un attelage de remorque à boule, constitué d'au moins deux poussoirs de friction, guidés en étant mobiles dans le carter de l'attelage et pouvant être appliqués contre la boule, caractérisé en ce que les poussoirs à friction (8) peuvent être reglés en position par un ressort (12) et par une tête de réglage (23), qui est reliée au carter de l'attelage (3), avec possibilité de se déplacer en rotation et axialement, au moyen d'un guidage à baïonnette (19, 25), le carter d'attelage (3) possédant des parties latérales saillantes (17), qui sont mutuellement opposées, dans lesquelles sont guidés les poussoirs de friction (8) et qui comportent, dans la surface latérale du carter, des voies incurvées (19) inclinées vers la boule (2).

2. Frein à friction suivant la revendication 1, caractérisé en ce que les têtes de réglage (23) comportent des leviers de manoeuvre (24) qui sont reliés entre eux par une poignée (30).

3. Frein à friction suivant la revendication 1 ou 2, caractérisé en ce que chaque partie saillante (17) du carter comporte trois voies incurvées (19), réparties d'une manière uniforme sur le pourtour.

4. Frein à friction suivant la revendication 1 ou 3, caractérisé en ce que les têtes de réglage (23) sont constituées en couvercles recouvrant les parties saillantes (17) du carter et pénétrant, par des tiges de guidage (25), radialement dans les voies incurvées (19) en forme de gorges.

5. Frein à friction suivant la revendication 1, 3 ou 4, caractérisé en ce que les voies incurvées (19) comportent, aux extrémités, des positions d'encliquetage (20, 21) par complémentarité de formes pour la tige de guidage (25).

6. Frein à friction suivant l'une ou plusieurs des revendications 1 à 5, caractérisé en ce que les tiges de guidage (25) sont guidées dans les voies incurvées (19) par un palier à roulement (26).

7. Frein à friction suivant la revendication 1 ou l'une des suivantes, caractérisé en ce que le poussoir de friction (28) est constitué de manière à être réglable en longueur.

8. Frein à friction suivant la revendication 7, caractérisé en ce que le poussoir de friction (8) porte un ressort de pression (12), que le couvercle (23) repousse par un rebord (27).

9. Frein à friction suivant la revendication 7 ou 8, caractérisé en ce que le poussoir de friction (8) comporte un support de garniture (9) qui est relié de manière réglable en longueur à une douille de blocage (13) sur laquelle est enfilé un bloc-ressort (12).

10. Frein à friction suivant la revendication 9, caractérisé en ce que le poussoir de friction (8) est guidé, sans possibilité de tourner (28), par son support de garniture (9), dans la partie saillante (17) du carter, la douille de blocage (13) faisant saillie par une ouverture (29) dans le couvercle (23) et comportant une surface formant clé (15) et accessible de l'extérieur.

11. Frein à friction suivant la revendication 2, caractérisé en ce que la poignée (30) comporte deux demi-poignées (31, 32) qui sont disposées respectivement sur un levier de manoeuvre (24) et qui sont reliées entre elles avec une élasticité à la flexion (35).

12. Frein à friction suivant la revendication 11, caractérisé en ce que les moitiés de poignées (31, 32) sont reliées entre elles par complémentarité de formes par une clavette (34) et sont vissées.

13. Frein à friction suivant la revendication 2, caractérisé en ce que la poignée (30) comporte un capot (41) qui, lorsque le frein à friction (7) est fermé, est au-dessus de la poignée de l'attelage (5).

*Fig 1*

Fig. 2

EP 0 356 752 B1

Fig 3

Fig 4

EP 0 356 752 B1

*Fig 5*

16

40

15

14

13

12

14

11

9

8

36

10

*Fig 6*

*Fig 7*